# DEMANDE DE BREVET EUROPEEN

(11) **EP 4 585 112 A1**
(43) Date de publication de la demande: **16.07.2025**
(21) Numéro de dépôt: 25150860.2
(22) Date de dépôt: 09.01.2025
(51) Int. Cl.: A47J 31/44, A47J 31/46

(54) **TÊTE DE DISTRIBUTION DE BOISSON ET MACHINE DE DISTRIBUTION DE BOISSON ASSOCIÉE**

(30) Priorité: 10.01.2024 FR 2400230
(71) Demandeur: SEB S.A., 69130 Ecully (FR)
(72) Inventeur: MORIN, Gilles, 69134 ECULLY CEDEX (FR); DASSONVILLE, Yohan, 69134 ECULLY CEDEX (FR); SABATTIER, Johan, 69134 ECULLY CEDEX (FR)
(74) Mandataire: SEB Développement

(57) **Abrégé**

Cette tête de distribution de boisson (18) comprend un logement de réception (26) d'un dispositif de moussage de lait (28), le dispositif de moussage de lait (28) comprenant un élément de mélange. Conformément à l'invention, le dispositif de moussage de lait (28) comprend une partie de fermeture (96) mobile par rapport à l'élément de mélange et la tête de distribution (18) comprend un dispositif d'appui (130) sur la partie de fermeture (96) propre, lorsque le dispositif de moussage de lait (28) est positionné dans le logement de réception (26), à exercer un effort d'appui sur la partie de fermeture (96) pour assurer un appui de la partie de fermeture contre l'élément de mélange.

## Description

### Domaine technique

La présente invention se rapporte au domaine des machines de distribution de boisson et notamment des machines à café de préférence automatiques. Plus particulièrement la présente invention concerne le domaine des têtes de distribution de boisson destinées à recevoir des dispositifs de moussage de lait. De telles têtes de distribution de boisson permettent notamment de réaliser des boissons à base de café et de mousse de lait.

### Etat de la technique

Le document DE 102008042276 B4 divulgue une tête de distribution de boisson comprenant une sortie de distribution d'eau chaude/vapeur et un logement de réception d'un dispositif de moussage de lait muni d'un orifice d'entrée d'eau chaude/vapeur propre à être connecté à la sortie de distribution d'eau chaude/vapeur. Dans DE102008042276 B4 la tête de distribution comprend une porte de fermeture/ouverture du logement de réception mobile en translation

La porte permet de fermer le logement de réception ou d'en autoriser l'accès pour connecter ou accéder au dispositif de moussage de lait.

Cependant, la tête de distribution de boisson selon DE102008042276 B4 ne permet pas de disposer d'un dispositif de moussage de lait dont le nettoyage est facilité et pour lequel les performances de moussage sont optimisées.

### Résumé de l'invention

La présente invention vise à remédier à ces inconvénients.

Le problème technique à la base de l'invention consiste à proposer une tête de distribution de boisson propre à recevoir un dispositif de moussage de lait dont le nettoyage est facilité et permettant d'assurer une performance de moussage optimisée.

A cet effet, l'invention a pour objet une tête de distribution de boisson comprenant une sortie de distribution d'eau chaude/vapeur et un logement de réception d'un dispositif de moussage de lait muni d'un orifice d'entrée d'eau chaude/vapeur propre à être relié fluidiquement à la sortie de distribution d'eau chaude/vapeur, le dispositif de moussage de lait comprenant un élément de mélange. Conformément à l'invention, le dispositif de moussage de lait comprend une partie de fermeture mobile par rapport à l'élément de mélange et la tête de distribution comprend un dispositif d'appui sur la partie de fermeture propre, lorsque le dispositif de moussage de lait est positionné dans le logement de réception, à exercer un effort d'appui sur la partie de fermeture pour assurer un appui de la partie de fermeture contre l'élément de mélange.

Grâce à l'invention, la performance du dispositif de moussage est améliorée car le dispositif d'appui permet de garantir une étanchéité entre l'élément de mélange et la partie de fermeture. En outre, le nettoyage du dispositif de moussage de lait est facilité, grâce à la partie de fermeture qui est mobile par rapport à l'élément de mélange, ce qui permet de garantir des performances améliorées dans le temps. De plus, le dispositif d'appui permet d'assurer un bon plaquage de la partie de fermeture contre l'élément de mélange et ainsi d'éviter toute déformation de la partie de fermeture et de l'élément de mélange lors du fonctionnement du dispositif de moussage.

Selon des aspects avantageux mais non obligatoires de l'invention, une telle tête de distribution de boisson peut incorporer une ou plusieurs des caractéristiques suivantes, prises dans toute combinaison techniquement admissible.

Selon une caractéristique avantageuse de l'invention, le dispositif d'appui comprend un levier de maintien monté pivotant par rapport au logement de réception et propre à être déplacé entre une position ouverte d'accès au logement de réception et une position fermée dans laquelle le dispositif d'appui exerce l'effort d'appui sur la partie de fermeture.

Un tel agencement permet de faciliter l'intégration du dispositif de moussage dans la tête de distribution de boisson ainsi que son déplacement par rapport au logement de réception. En outre, cela permet d'associer au levier de maintien plusieurs fonctions dont une fonction d'appui sur la partie de fermeture et une fonction d'accès au logement de réception.

Selon une caractéristique avantageuse de l'invention, le dispositif d'appui comprend au moins une nervure supérieure disposée sur une paroi supérieure du levier de maintien et propre à venir en appui contre la partie de fermeture lorsque le levier de maintien est en position fermée.

Un tel agencement permet de simplifier l'intégration du dispositif d'appui dans la tête de distribution de boisson et d'assurer un appui vertical sur la partie de fermeture.

Selon une caractéristique avantageuse de l'invention, le dispositif d'appui comprend au moins une nervure avant disposée sur une façade avant du levier de maintien et propre à venir en appui contre la partie de fermeture lorsque le levier de maintien est en position fermée.

Un tel agencement permet d'assurer un appui horizontal sur la partie de fermeture.

Selon une caractéristique avantageuse de l'invention, le levier de maintien est monté pivotant selon un axe longitudinal de la tête de distribution de boisson, la position ouverte correspondant à une position haute et la position fermée à une position basse.

Un tel agencement permet de simplifier la manipulation du levier de maintien et donc les opérations d'insertion du dispositif de moussage dans le logement de réception et de retrait du dispositif de moussage du logement de réception.

Selon une caractéristique avantageuse de l'invention, le levier de maintien comprend une face avant munie d'une zone de préhension par l'utilisateur pour manipuler le levier de maintien entre ses positions ouverte et fermée.

Un tel agencement permet de faciliter la manipulation du levier de maintien.

Selon une caractéristique avantageuse de l'invention, le logement de réception comprend au moins un élément de guidage du dispositif de moussage de lait propre à coopérer avec un élément de guidage correspondant situé sur le dispositif de moussage de lait.

Un tel agencement permet de faciliter l'insertion et le positionnement du dispositif de moussage de lait dans la tête de distribution de boisson.

Selon une caractéristique avantageuse de l'invention, chaque élément de guidage du logement de réception est propre à maintenir une partie de fermeture du dispositif de moussage en contact avec un élément de mélange du dispositif de moussage de lait lorsque le dispositif de moussage de lait est inséré dans le logement de réception.

Un tel agencement permet d'assurer la fermeture et le maintien en position de fermeture, c'est-à-dire en contact avec l'élément de mélange, de la partie de fermeture lorsque le dispositif de moussage est intégré dans la tête de distribution de boisson. Avantageusement, chaque élément de guidage du dispositif de moussage est propre à coopérer avec chaque élément de guidage correspondant situé dans la tête de distribution de boisson, pour assurer la fermeture et le maintien en position de fermeture de la partie de fermeture lors de l'insertion du dispositif de moussage dans le logement de réception.

Selon une caractéristique avantageuse de l'invention, la tête de distribution comprend une paroi supérieure munie d'un orifice de passage d'un organe de réglage du débit d'air dans le dispositif de moussage de lait.

Un tel agencement permet de faciliter l'intégration du dispositif de moussage dans le logement de réception et d'autoriser l'accès à l'utilisateur à l'organe de réglage du débit d'air dans le dispositif de moussage de lait.

Selon une caractéristique avantageuse de l'invention, la tête de distribution comprend une paroi supérieure munie d'une zone de visualisation d'une partie de mélange du dispositif de moussage de lait.

Un tel agencement permet à l'utilisateur de visualiser le dispositif de moussage au travers de la zone de visualisation et ainsi de vérifier son bon positionnement mais également son bon fonctionnement. En outre en observant le dispositif de moussage l'utilisateur peut observer si celui-ci a déjà servi et si une opération de nettoyage est nécessaire.

Selon une caractéristique avantageuse de l'invention, la tête de distribution comprend une zone arrière recevant un organe de distribution de boisson et une zone avant définissant le logement de réception du dispositif de moussage de lait.

Un tel agencement permet d'améliorer la compacité de la tête de distribution de boisson tout en y intégrant le dispositif de moussage.

Avantageusement le levier de maintien comprend une façade avant pleine propre à recouvrir le logement de réception et notamment une face avant du dispositif de moussage lorsqu'il est reçu dans le logement de réception.

Avantageusement, le dispositif de moussage est amovible par rapport au logement de réception entre une position assemblée dans laquelle il est reçu dans le logement et l'orifice d'entrée d'eau chaude/vapeur est relié fluidiquement à la sortie de distribution d'eau chaude/vapeur et une position désassemblée dans laquelle il est séparé du logement de réception et l'orifice d'entrée d'eau chaude/vapeur n'est plus relié fluidiquement à la sortie de distribution d'eau chaude/vapeur.

L'invention a également pour objet une machine de distribution de boisson comprenant une tête de distribution de boisson. Conformément à l'invention, la tête de distribution de boisson est telle que décrite ci-dessus.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue de face d'une machine de distribution de boisson comprenant une tête de distribution de boisson recevant un dispositif de moussage de lait conforme à un premier mode de réalisation de l'invention.
La figure 2 est une vue en perspective de la tête de distribution de boisson de la figure 1 sur laquelle un dispositif d'appui/maintien associé à la tête de distribution de boisson est en position fermée;
La figure 3 est une vue en perspective de la tête de distribution de boisson de la figure 1 sur laquelle un dispositif d'appui/maintien associé à la tête de distribution de boisson est en position ouverte ;
La figure 4 est une vue analogue à la figure 3 sur laquelle un élément de guidage du dispositif de moussage de lait dans la tête de distribution de boisson est omis ;
La figure 5 est une vue de côté en coupe selon le plan de coupe vertical selon la ligne V-V de la tête de distribution de boisson de la figure 2 ;
La figure 6 est une vue en perspective du dispositif de moussage de lait des figures 1 à 5 comprenant une partie de fermeture en position de fermeture;
La figure 7 est une vue analogue à la figure 6 sur laquelle la partie de fermeture est en position d'ouverture;
La figure 8 est une vue en éclaté du dispositif de moussage de la figure 7 ;
La figure 9 est une vue en perspective d'un dispositif de moussage selon un deuxième mode de réalisation de l'invention dans laquelle une partie de fermeture est en position de fermeture;
La figure 10 est une vue en perspective du dispositif de moussage de la figure 9 dans laquelle la partie de fermeture est en position d'ouverture.

Seuls les éléments nécessaires à la compréhension de l'invention ont été représentés. Pour faciliter la lecture des dessins, les mêmes éléments portent les mêmes références d'une figure à l'autre.

### Description détaillée de l'invention

Dans la suite de la description on entend par mousse ou moussage le fait d'obtenir à partir d'un liquide une mousse que ce soit seulement de la mousse de ce liquide (i.e. de la mousse de lait) ou un mélange de ce liquide et de mousse de ce liquide (i.e. un mélange de lait et de mousse de lait).

On notera que dans ce document, les termes « horizontal », « vertical », « inférieur », « supérieur », « haut », « bas », « avant », « arrière », « longitudinal », « transversal », employés pour décrire la machine de distribution de boisson et les éléments associés à celle-ci font référence à la machine de distribution de boisson et aux éléments associés en situation d'usage, lorsque la machine repose à plat sur un plan de travail.

De plus les termes « amont » et « aval » ou « entrée » et « sortie » sont définis en fonction d'un sens de circulation de la boisson ou de la vapeur dans la machine de distribution de boisson et dans le dispositif de moussage de lait.

Les termes « externe » et « interne » de même que les termes « extérieur » et « intérieur » sont définis par rapport à un axe central de la machine de distribution de boisson ou du dispositif de moussage de lait. Ainsi une portion/partie interne/intérieure sera plus proche de l'axe central qu'une portion/partie externe/extérieure.

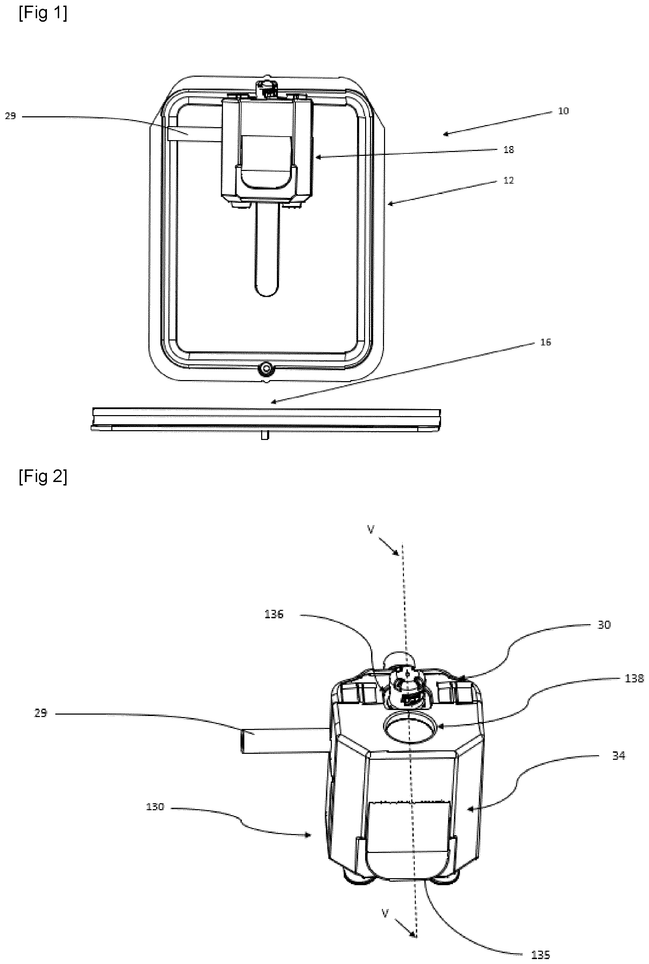

La machine de distribution de boisson représentée à la figure 1 est une machine à café 10. En variante, la machine de distribution de boisson est une machine de distribution d'eau chaude ou de thé.

La machine à café 10 est avantageusement une machine à café automatique.

La machine à café 10 comporte un bâti 12 et une zone de réception 16 d'un contenant ou récipient sur laquelle un contenant/récipient, non représenté, est propre à être disposé.

La machine à café 10 comprend également une tête de distribution de boisson 18.

La machine à café 10 comprend avantageusement une interface homme machine, non visible sur les figures, via laquelle un utilisateur est propre à sélectionner un type de boisson à distribuer et avantageusement à saisir des paramètres de réglage de la machine à café 10.

La machine à café 10 comporte également une unité de préparation de boisson, non représentée, intégrée au bâti 12.

L'unité de préparation comprend un circuit de commande pour gérer la réalisation d'une boisson à partir des instructions données par l'utilisateur. L'unité de préparation comprend également une chaudière produisant de l'eau chaude et/ou de la vapeur et un réservoir formant une réserve en eau froide. Le réservoir permet d'alimenter la chaudière pour produire de l'eau chaude et/ou de la vapeur.

L'unité de préparation comprend également avantageusement, de manière connue et non représentée, un réservoir de grains de café, un moulin à grains automatique et une chambre d'infusion propre à recevoir les grains de café moulus et à être alimentée en eau chaude par la chaudière. La chambre d'infusion est reliée fluidiquement à la tête de distribution 18, de manière à ce que la machine 10 soit propre à distribuer une boisson à base de café via la tête de distribution de boisson 18.

La machine à café 10 comprend également un embout de sortie d'eau chaude/vapeur, non visible sur les figures, propre à être alimenté en eau chaude et/ou vapeur par la chaudière. L'embout de sortie d'eau chaude/vapeur débouche à proximité de la tête de distribution de boisson 18 pour l'alimenter en eau chaude/vapeur.

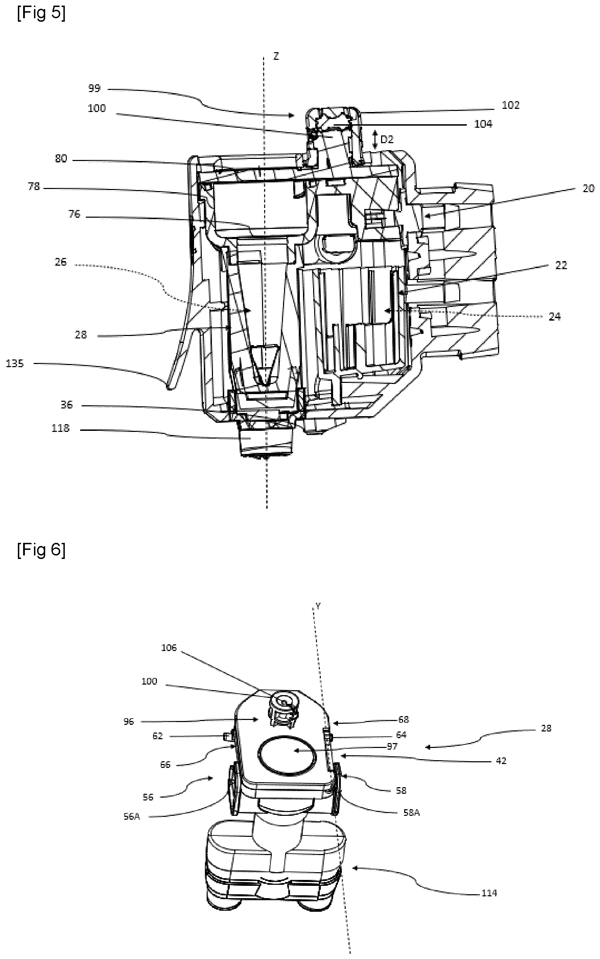

Dans le mode de réalisation des figures 1 à 5, la tête de distribution de boisson 18 comprend une sortie de distribution d'eau chaude/vapeur 20, visible à la figure 5, reliée fluidiquement à l'embout de sortie d'eau chaude/vapeur.

L'embout de sortie d'eau chaude/vapeur est par exemple formé par un tube propre à être connecté à la sortie de distribution d'eau chaude/vapeur 20.

La tête de distribution de boisson 18 comprend également un organe de distribution de boisson 22 propre à être relié fluidiquement à la chambre d'infusion et à distribuer la boisson à base de café.

L'organe de distribution de boisson 22 comprend avantageusement deux sorties de distribution de boisson, dont une seule 36 est visible à la figure 5, de sorte qu'il est propre à délivrer la boisson à base de café dans deux tasses simultanément.

Comme visible à la figure 5, la tête de distribution de boisson 18 comprend une zone 24, de préférence arrière, recevant l'organe de distribution de boisson 22 et une zone, de préférence avant, définissant un logement 26 de réception d'un dispositif de moussage de lait 28.

La tête de distribution de boisson 18 est avantageusement réglable en hauteur.

La tête de distribution de boisson 18 comprend également une entrée d'alimentation 29 en lait du dispositif de moussage 28.

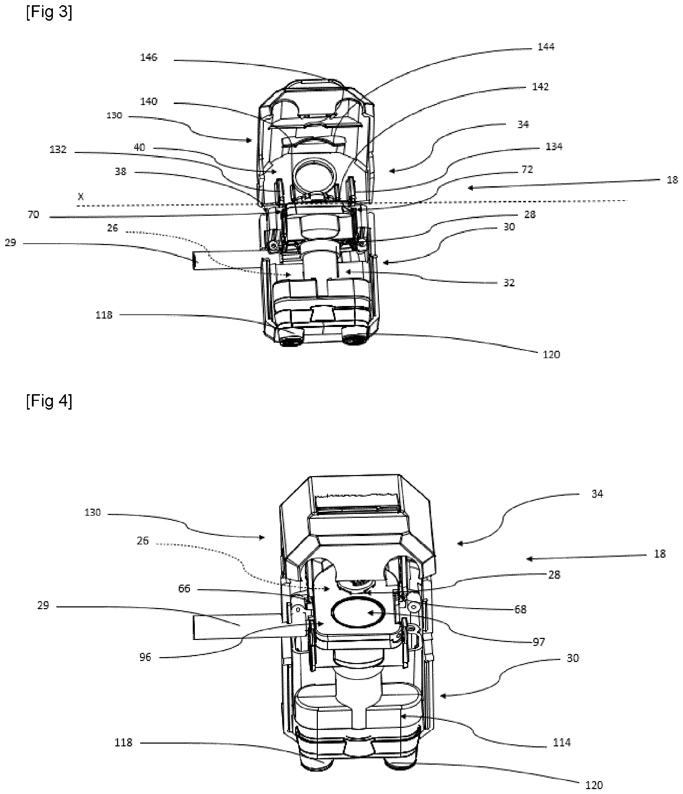

Avantageusement, et comme représenté à la figure 3, l'entrée d'alimentation 29 débouche sur un côté latéral de la tête de distribution de boisson 18. L'entrée d'alimentation 29 est propre à recevoir un tube d'alimentation en lait relié fluidiquement à un récipient de lait de préférence déporté par rapport à la machine 10.

Comme visible aux figures 2 à 4, la tête de distribution de boisson 18 comprend un corps principal 30 définissant le logement 26 de réception du dispositif de moussage 28 et la zone 24 de réception de l'organe de distribution de boisson 22.

Le corps principal 30 comprend une extrémité avant 32 ouverte d'accès au logement de réception 26.

La tête de distribution de boisson 18 comprend également un corps de fermeture 34 de l'extrémité avant 32.

Dans le mode de réalisation représenté, le corps de fermeture 34 est monté pivotant sur le corps principal 30. Le corps de fermeture 34 est propre à être déplacé entre une position ouverte d'accès au logement de réception 26 du dispositif de moussage 28 et une position fermée dans laquelle il vient fermer au moins partiellement le logement de réception 26 notamment l'extrémité avant 32 du corps principal 30.

Le corps de fermeture 34 est articulé en rotation sur le corps principal 30 selon un axe longitudinal X sensiblement horizontal. L'articulation est par exemple située entre une paroi supérieure 38 du corps principal 30 et une paroi supérieure 40 du corps de fermeture 34.

Dans l'exemple des figures 1 à 8, le dispositif de moussage 28 est amovible par rapport à la tête de distribution de boisson 18 et notamment au logement de réception 26. En d'autres termes le dispositif de moussage est propre à être intégré dans la tête de distribution de boisson 18.

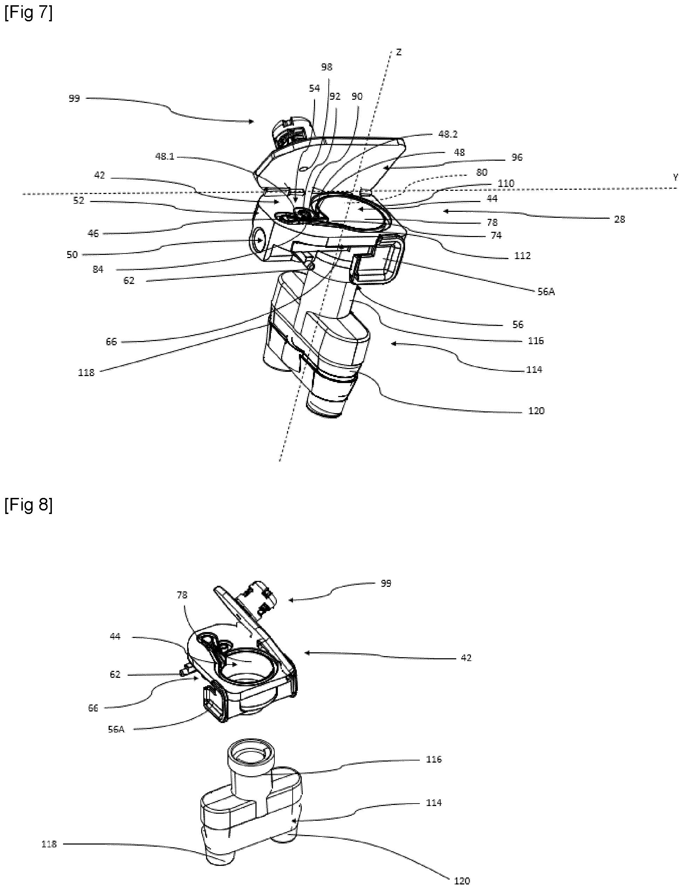

Comme visible à la figure 7, le dispositif de moussage 28 comprend un élément de mélange 42 comprenant une partie de mélange 44, un orifice d'entrée d'eau chaude/vapeur 46 et un conduit d'écoulement principal 48 reliant l'orifice d'entrée d'eau chaude/vapeur 46 à la partie de mélange 44.

Le dispositif de moussage 28 et notamment l'élément de mélange 42 comprend également un organe de connexion 50 du dispositif de moussage à la sortie de distribution d'eau chaude/vapeur 20.

L'organe de connexion 50 débouche sur une face 52 arrière du dispositif de moussage 28 et notamment de l'élément de mélange 42.

Lors du positionnement du dispositif de moussage 28 dans le logement de réception 26, l'organe de connexion 50 est propre à être connecté à la sortie de distribution d'eau chaude/vapeur 20 de sorte à être alimenté en eau chaude/vapeur.

L'orifice d'entrée d'eau chaude/vapeur 46 est relié fluidiquement à l'organe de connexion 50 de manière à recevoir de l'eau chaude/vapeur délivrée par la sortie de distribution d'eau chaude/vapeur 20 lorsque l'organe de connexion 50 est connecté à la sortie de distribution d'eau chaude/vapeur 20.

En variante, l'orifice d'entrée d'eau chaude/vapeur 46 est propre à être connecté directement à la sortie de distribution d'eau chaude/vapeur 20 lors du positionnement du dispositif de moussage 28 dans le logement de réception 26.

De manière générale, l'orifice d'entrée d'eau chaude/vapeur 46 est propre à être reliée fluidiquement à la sortie de distribution d'eau chaude/vapeur 20 lorsque le dispositif de moussage 28 est reçu dans la tête de distribution de boisson 18. Cette liaison est réversible car l'organe de connexion 50 est propre à être connecté/déconnecté de la sortie de distribution d'eau chaude/vapeur 20.

L'élément de mélange 42 comprend une paroi supérieure 54.

Le dispositif de moussage 28 et notamment l'élément de mélange 42 comprennent deux parois latérales 56, 58.Les parois latérales 56, 58 définissent chacune une zone de préhension 56A, 58A du dispositif de moussage 28 par un utilisateur. Un utilisateur du dispositif de moussage 28 est propre à manipuler le dispositif de moussage 28 et à le positionner dans le logement de réception 26 en le manipulant avec les doigts au niveau des zones de préhension 56A, 58A.

Les parois latérales 56, 58 sont munies chacune d'un ergot 62, 64 de maintien/positionnement du dispositif de moussage 28 dans la tête de distribution de boisson 18.

Les ergots 62, 64 sont propres à coopérer avec le corps de fermeture 34 qui forme un dispositif de maintien du dispositif de moussage 28 dans la tête de distribution de boisson 18 comme cela sera expliqué par la suite dans la description détaillée du corps de fermeture 34 et de son interaction avec le dispositif de moussage 28.

Les parois latérales 56, 58 sont également munies chacune d'un élément de guidage 66, 68 propre à coopérer avec un élément de guidage 70, 72 correspondant situé dans la tête de distribution de boisson 18.

Les éléments de guidage 66, 68 sont par exemple formés par des nervures agencées au niveau des parois latérales 56, 58.

Les éléments de guidage 70, 72 sont par exemple des rainures propres à recevoir les nervures correspondant aux éléments de guidages 66, 68 et forment une liaison glissière avec lesdites nervures.

Les éléments de guidage 70, 72 sont agencés dans une partie supérieure du logement de réception 26.

Les éléments de guidage 66, 68 sont par exemple situés devant les zones de préhension suivant une direction d'insertion du dispositif de moussage 28 dans la tête de distribution 18.

Avantageusement et comme représenté sur les figures, les éléments de guidage 66, 68 sont formés par une portion de la paroi latérale 56, 58 correspondante formant la nervure.

Les ergots 62, 64 sont avantageusement en saillie suivant l'axe longitudinal X par rapport aux éléments de guidage 66, 68 et plus généralement par rapport aux autres éléments formant les parois latérales 56, 58. En d'autres termes, ils s'étendent vers l'extérieur du dispositif de moussage 28 au-delà des éléments de guidage 66, 68 suivant l'axe longitudinal X .

Comme visible à l'aide des figures 5 et 7, la partie de mélange 44 comprend une ouverture d'entrée de liquide 74, une ouverture de sortie de liquide 76 et une chambre de mélange 78 s'étendant entre l'ouverture d'entrée de liquide 74 et l'ouverture de sortie de liquide 76.

La chambre de mélange 78 s'étend suivant un axe vertical Z.

La chambre de mélange 78 comprend une extrémité supérieure ouverte 80. L'extrémité supérieure ouverte 80 forme une ouverture d'accès à la chambre de mélange 78.

La chambre de mélange 78 débouche dans une face supérieure de la paroi supérieure 54 de l'élément de mélange 42.

La chambre de mélange 78 est de section sensiblement circulaire perpendiculairement à l'axe vertical Z.

L'ouverture d'entrée de liquide 74 débouche dans une partie supérieure de la chambre de mélange 78, et par exemple dans un point haut de la chambre de mélange 78 et l'ouverture de sortie de liquide 76 est située dans une partie inférieure de la chambre de mélange 78, et est par exemple située en un point bas de la chambre de mélange 78.

L'extrémité supérieure ouverte 80 est disposée sur une face supérieure de l'élément de mélange 42 et donc de la paroi supérieure 54.

L'ouverture de sortie de liquide 76 est disposée sur une face inférieure de l'élément de mélange 42.

Le conduit d'écoulement principal 48 est ménagé dans la face supérieure de la paroi supérieure 54 et débouche dans la chambre de mélange 78 au niveau de l'ouverture d'entrée de liquide 74.

Le conduit d'écoulement principal 48 débouche sensiblement tangentiellement dans la chambre de mélange 78 de sorte que la chambre de mélange 78 soit de type cyclonique. Ainsi le liquide débouchant dans la chambre de mélange 78 depuis le conduit d'écoulement principal 48, traverse la chambre de mélange en tourbillonnant le long des parois de la chambre de mélange 78.

Comme visible à la figure 7, le conduit d'écoulement principal 48 comporte une restriction de section 84 située par exemple dans une portion centrale du conduit d'écoulement principal 48. Le conduit d'écoulement principal 48 comprend notamment une première portion de conduit 48.1 qui est située en amont de la restriction de section 84 et qui s'étend jusqu'à la restriction de section, et une deuxième portion de conduit 48.2 qui est située en aval de la restriction de section 84 et qui s'étend depuis la restriction de section 84 et jusqu'à la chambre de mélange 78. De façon avantageuse, la première portion de conduit 48.1 présente une section de passage qui diminue en direction de la restriction de section 84 et la deuxième portion de conduit 48.2 présente une section de passage qui augmente en direction de la chambre de mélange 78.

L'orifice d'entrée d'eau chaude/vapeur 46 débouche dans la première portion de conduit 48.1 et plus particulièrement à l'opposé de la chambre de mélange 78. Le conduit d'écoulement principal 48 est ainsi configuré pour relier fluidiquement l'orifice d'entrée d'eau chaude/vapeur 46 à la chambre de mélange 78, et pour permettre un écoulement d'eau chaude/vapeur dans le conduit d'écoulement principal 48 et jusqu'à la chambre de mélange 78.

Le dispositif de moussage 28 comprend un conduit d'amenée de lait 90 relié au conduit d'écoulement principal 48. Le conduit d'amenée de lait 90 s'étend entre le conduit d'écoulement principal 48 et l'entrée d'alimentation en lait 29 lorsque le dispositif de moussage 28 est positionné dans le logement de réception 26.

Le conduit d'amenée de lait 90 est propre à être connecté fluidiquement à un réservoir de lait déporté distinct du dispositif de moussage de lait 28.

Le conduit d'amenée de lait 90 est relié fluidiquement au conduit d'écoulement principal 48, et donc configuré pour être relié fluidiquement à la chambre de mélange 78 via le conduit d'écoulement principal 48. Selon le mode de réalisation représenté sur les figures, l'élément de mélange 42 comporte le conduit d'amenée de lait 90, et plus particulièrement l'élément de mélange et le conduit d'amenée de lait 90 sont réalisés d'un seul tenant.

Le conduit d'amenée de lait 90 comprend une portion sensiblement verticale qui s'étend, de préférence depuis le voisinage d'une face inférieure de l'élément de mélange 42, et débouche dans le conduit d'écoulement principal 48 au niveau de la restriction de section 84. Une extrémité inférieure de la portion verticale est propre à être connectée fluidiquement à l'entrée d'alimentation en lait 29 lorsque le dispositif de moussage 28 est positionné dans le logement de réception 26.

Sur les figures seule la partie du conduit d'amenée de lait 90 qui débouche dans le conduit d'écoulement principal 48 est visible.

Le dispositif de moussage 28 comprend également un canal d'admission d'air 92 dans le conduit d'écoulement principal 48. Selon le mode de réalisation représenté l'élément de mélange 42 comporte le canal d'admission d'air 92.

Avantageusement, le canal d'admission d'air 92 est ménagé dans la face supérieure de la paroi supérieure 54 de l'élément de mélange 42.

Le canal d'admission d'air 92 débouche dans le conduit d'écoulement principal 48 au niveau de la restriction de section 84. Le canal d'admission d'air 92 est ainsi configuré pour être relié fluidiquement à la chambre de mélange 78 via le conduit d'écoulement principal 48.

La restriction de section 84, décrite préalablement, induit une augmentation de la vitesse de la vapeur s'écoulant dans le conduit d'écoulement principal 48, ce qui génère une dépression dans le conduit d'amenée de lait 90 et dans le canal d'admission d'air 92. La restriction de section 84 est donc plus particulièrement configurée pour former un système d'aspiration de lait et d'air basé sur l'effet venturi. Le conduit d'écoulement principal 48 est ainsi configuré de telle sorte qu'un écoulement d'eau chaude/vapeur dans le conduit d'écoulement principal 48 depuis l'orifice d'entrée d'eau chaude/vapeur 46 et jusqu'à la chambre de mélange 78 génère une dépression dans le conduit d'amenée de lait 90 et une dépression dans le canal d'admission d'air 92 et entraîne par conséquent une aspiration de lait et d'air dans le conduit d'écoulement principal 48 et un écoulement du lait et de l'air aspirés jusqu'à la chambre de mélange 78.

De plus, la deuxième portion de conduit 48.2, qui présente une section de passage qui augmente en direction de la chambre de mélange 78, favorise un premier mélange de la vapeur, du lait et de l'air provenant respectivement de l'orifice d'entrée d'eau chaude/vapeur 46, du conduit d'amenée de lait 90 et du canal d'admission d'air 92, avant leur arrivée dans la chambre de mélange 78.

En outre, de par le positionnement du conduit d'écoulement principal 48 par rapport à la chambre de mélange 78, le premier mélange de vapeur, de lait et de l'air subit un mouvement cyclonique lors de son arrivée de la chambre de mélange et tourbillonne le long des parois de la chambre de mélange 78 ce qui favorise encore le mélange et l'obtention d'une mousse de lait de consistance optimale. Ainsi, la chambre de mélange 78 permet l'homogénéisation du premier mélange précité et permet de finaliser le mélange qui a commencé dans la deuxième portion de conduit 48.2.

Le conduit d'écoulement principal 48, de même que l'orifice d'entrée d'eau chaude/vapeur 46, de même que le canal d'admission d'air 92 et la chambre de mélange 78 comprennent avantageusement une extrémité supérieure ouverte. En d'autres termes, ils forment des canaux de circulation de liquide ouverts sur l'extérieur dans leur partie haute.

Le dispositif de moussage 28 comprend une partie de fermeture 96 mobile par rapport à l'élément de mélange 42 entre une position de fermeture dans laquelle la partie de fermeture 96 ferme la partie de mélange 44 et le conduit d'écoulement principal 48 et une position d'ouverture dans laquelle la partie de mélange 44 et le conduit d'écoulement principal 48 sont ouverts et accessibles pour autoriser un nettoyage de la partie de mélange 44 et du conduit d'écoulement principal 48.

Dans la position de fermeture, la partie de fermeture 96 ferme notamment, l'extrémité supérieure ouverte de l'orifice d'entrée d'eau chaude/vapeur 46, du conduit d'écoulement principal 48 et de la chambre de mélange 78.

Avantageusement, dans la position de fermeture, la partie de fermeture 96 ferme également au moins partiellement le canal d'admission d'air 92 et notamment l'extrémité supérieure ouverte du canal d'admission d'air.

Avantageusement, le conduit d'écoulement principal 48 s'étend selon un plan sensiblement horizontal et comprend sur au moins 50% de sa longueur, de préférence sur au moins 70% de sa longueur une ouverture supérieure également appelée extrémité supérieure ouverte, propre à être fermée lorsque la partie de fermeture 96 est en position de fermeture.

La partie de fermeture 96 est configurée pour recouvrir la face supérieure de la paroi supérieure 54 de l'élément de mélange 42. La partie de fermeture 96 forme un couvercle sensiblement plan propre à recouvrir la face supérieure de la paroi supérieure 54 et notamment la partie de mélange 44 et le conduit d'écoulement principal 48.

La partie de fermeture 96 est configurée pour être articulée avec l'élément de mélange 42 via une charnière définissant un axe Y de rotation sensiblement horizontal. L'axe de rotation Y est avantageusement perpendiculaire à l'axe longitudinal X lorsque le dispositif de moussage est positionné dans le logement de réception 26. En variante non représenté, l'axe de rotation Y est parallèle à l'axe longitudinal X.

La charnière permet de simplifier la manipulation du dispositif de moussage en assurant un maintien de la partie de fermeture 96 à l'élément de mélange 42 quelle que soit la position de la partie de fermeture. De plus la charnière permet de facilement déplacer la partie de fermeture en position ouverte ou fermée suivant si l'utilisateur souhaite nettoyer ou utiliser le dispositif de moussage.

Avantageusement, les parois latérales 56, 58 du dispositif de moussage, comprenant des parois latérales de la partie de fermeture 96 et les parois latérales de l'élément de mélange 42, forment, lorsque la partie de fermeture 96 est en position de fermeture, les éléments de guidage 66, 68. Un tel agencement permet d'assurer la fermeture du dispositif de moussage 28, c'est-à-dire de la partie de fermeture 96, lors de l'insertion du dispositif de moussage 28 dans le logement de réception 26 et de l'interaction des éléments de guidage 66, 68 avec les éléments de guidage 70, 72 correspondants. En outre, un tel agencement permet d'assurer le maintien de la partie de fermeture 96 en position de fermeture lorsque le dispositif de moussage 28 est reçu dans le logement de réception 26 puisque les éléments de guidage 70, 72 s'étendent de part et d'autre des éléments de guidage 66, 68 correspondants selon une direction sensiblement verticale et assurent que les parois latérales de la partie de fermeture 96 restent en contact/adjacentes avec les parois latérales de l'élément de mélange 42.

En d'autres termes, chaque élément de guidage 70, 72 est propre à maintenir la partie de fermeture 96 du dispositif de moussage en position de fermeture, c'est à dire en contact avec l'élément de mélange 42 lorsque le dispositif de moussage 28 est inséré dans le logement de réception 26.

En variante non représentée, le dispositif de moussage 28 comprend un système de maintien non représenté configuré pour maintenir la partie de fermeture 96 en position de fermeture. Le système de maintien est par exemple formé par un organe de verrouillage tel un clip de verrouillage solidaire de la partie de fermeture et propre à être maintenu par coopération de forme dans une rainure correspondante formée sur l'élément de mélange 42 et notamment sa paroi/face supérieure 54 lorsque la partie de fermeture est en position de fermeture. Le système de maintien est propre à être déplacé entre une position de verrouillage de la partie de fermeture 96 en position fermée et une position de déverrouillage.

La partie de fermeture 96 comprend une fenêtre de visualisation 97, visible sur la figure 6, destinée à être en regard de la partie de mélange 44 et notamment de la chambre de mélange 78 lorsque la partie de fermeture 96 est en position de fermeture.

La fenêtre de visualisation 97 est destinée à être en regard de l'extrémité supérieure ouverte 80 lorsque la partie de fermeture 96 est en position de fermeture.

La fenêtre de visualisation 97 est par exemple formée par une portion de la partie de fermeture réalisée en un matériau transparent de sorte que l'utilisateur puisse visualiser l'intérieur de la chambre de mélange 78 lorsque la partie de fermeture 96 est en position de fermeture.

La fenêtre de visualisation 97 permet à l'utilisateur de visualiser si le dispositif de moussage 28 a déjà été utilisé et s'il faut le nettoyer avant de réaliser une boisson. En effet l'utilisateur peut observer via cette fenêtre l'intérieur de la chambre de mélange 78. En outre, l'utilisateur peut vérifier le bon fonctionnement du dispositif de moussage 28 au travers de la fenêtre de visualisation en vérifiant visuellement si le lait traverse la chambre de mélange 78 et a bien un mouvement cyclonique le long des parois de la chambre 78.

La partie de fermeture 96 comprend également un conduit d'amenée d'air 98, visible sur la figure 7, propre à être relié fluidiquement au conduit d'écoulement principal 48 lorsque la partie de fermeture 96 est en position de fermeture et un dispositif de réglage de débit d'air 99 configuré pour régler un débit d'air s'écoulant dans le conduit d'amenée d'air 98 jusqu'au conduit d'écoulement principal 48. Le conduit d'amenée d'air 98 est avantageusement relié au canal d'admission d'air 92 lorsque la partie de fermeture 96 est en position de fermeture de sorte à être relié fluidiquement au conduit d'écoulement principal 48.

Le conduit d'amenée d'air 98 est par exemple un orifice traversant la partie de fermeture 96 selon l'axe vertical Z lorsque la partie de fermeture 96 est en position de fermeture.

Selon le mode de réalisation représenté sur les figures, et comme plus clairement visible à la figure 5, le dispositif de réglage de débit d'air 99 comporte une partie de support 100 fixée à la partie de fermeture 96 et faisant saillie d'une face supérieure de la partie de fermeture 96. Le dispositif de réglage de débit d'air 99 comporte également un organe de réglage de débit 102, tel qu'un bouton de réglage de débit, supporté par la partie de support 100 et monté mobile, et par exemple monté mobile selon un mouvement hélicoïdal, par rapport à la partie de support 100 selon une direction de déplacement D2 qui peut par exemple être sensiblement verticale.

L'organe de réglage de débit 102 est configuré pour occuper une pluralité de positions de réglage décalées les unes des autres selon la direction de déplacement D2.

Le dispositif de réglage de débit d'air 99 comporte en outre un élément d'étanchéité 104 qui est fixé à l'organe de réglage de débit 102 et qui est configuré pour délimiter avec la partie de support 100 un passage d'écoulement d'air ayant une section de passage qui varie en fonction de la position occupée par l'organe de réglage de débit 102.

L'organe de réglage de débit 102 est plus particulièrement déplaçable entre une position de réglage maximale dans laquelle la section de passage du passage d'écoulement d'air est maximale, et une position de réglage minimale dans laquelle la section de passage du passage d'écoulement d'air est minimale, et par exemple nulle ou sensiblement nulle.

Selon le mode de réalisation représenté sur les figures, la partie de support 100 comporte un trou d'insertion 106, qui peut par exemple présenter un diamètre supérieur à un millimètre et de préférence supérieur à 1,5 millimètres, orienté sensiblement parallèlement à la direction de déplacement D2, et le dispositif de réglage de débit d'air 99 comporte un organe de restriction de passage non visible sur les figures, tel qu'une goupille ou un pointeau de forme globalement cylindrique, ayant une portion d'extrémité inférieure qui est logée dans le trou d'insertion 106. L'organe de restriction de passage est solidaire en mouvement de l'organe de réglage de débit 102, et est donc monté mobile dans le trou d'insertion 106 selon la direction de déplacement D2. Le trou d'insertion 106 et l'organe de restriction de passage délimitent plus particulièrement un passage d'air calibré relié fluidiquement au conduit d'amenée d'air 98.

Le dispositif de réglage de débit d'air 99 permet de régler le débit d'air injecté dans le conduit d'écoulement principal 48 et donc la taille des bulles d'air contenues dans la mousse de lait en sortie du dispositif de moussage 28. En faisant évoluer la taille des bulles d'air on fait évoluer le volume de mousse de lait.

Selon une variante de réalisation de l'invention, l'élément de mélange 42 pourrait être dépourvue du canal d'admission d'air 92, et le conduit d'amenée d'air 98 pourrait être relié directement au conduit d'écoulement principal 48 lorsque la partie de fermeture 96 est en position de fermeture.

Le dispositif de moussage de lait 28 comprend un joint d'étanchéité 110, visible à la figure 7, agencé à une zone de jonction entre l'élément de mélange 42 et la partie de fermeture 96. Le joint d'étanchéité 110 s'étend sur la périphérie de la partie de mélange 44 et du conduit d'écoulement principal 48.

La partie de fermeture 96 est propre à assurer un appui sur le joint d'étanchéité 110 lorsque la partie de fermeture 96 est en position de fermeture.

Comme montré plus particulièrement sur la figure 7, le joint d'étanchéité 110 s'étend autour de la chambre de mélange 78 et notamment de l'extrémité supérieure ouverte 80, du conduit d'écoulement principal 48, du canal d'admission d'air 92 et de l'orifice d'entrée d'eau chaude/vapeur 46. A cet effet, l'élément de mélange 42 comporte une rainure de réception 112 ménagée dans la face supérieure de la paroi supérieure 54 dans laquelle est logé le joint d'étanchéité 110.

Selon le mode de réalisation représenté sur les figures, le joint d'étanchéité 110 comporte un corps de joint logé intégralement dans la rainure de réception 112, et une lèvre d'étanchéité s'étendant le long du corps de joint et faisant saillie hors de la rainure de réception 112. De façon avantageuse, le joint d'étanchéité 110 est continu et peut par exemple présenter une section constante.

La partie de fermeture 96 permet avec le joint d'étanchéité 110 d'assurer une étanchéité au niveau de la paroi supérieure 54, du conduit d'écoulement principal 48, de même que de l'orifice d'entrée d'eau chaude/vapeur 46, du canal d'admission d'air 92 et de la chambre de mélange 78. Une performance optimisée du dispositif de moussage 28 est ainsi garantie.

Le dispositif de moussage de lait 28 comprend également un élément de distribution de lait moussé 114 propre à être connecté de manière réversible à l'élément de mélange 42 comme cela est plus clairement visible à la figure 8.

L'élément de distribution de lait moussé 114 comprend avantageusement un canal d'entrée 116 et deux canaux de sortie 118, 120 de lait moussé.

L'élément de distribution de lait moussé 114 et notamment le canal d'entrée 116 est propre à être relié fluidiquement à l'ouverture de sortie de liquide 76 lorsqu'il est connecté à l'élément de mélange 42.

L'élément de distribution de lait moussé 114 est propre à délivrer le lait moussé dans deux tasses simultanément via les deux canaux de sortie 118, 120.

Dans le mode de réalisation représenté, le corps de fermeture 34 forme un dispositif de maintien du dispositif de moussage 28 dans le logement de réception 26.

Le dispositif de maintien prend la forme d'un levier de maintien 130 mobile entre la position ouverte d'accès au logement de réception et la position fermée dans laquelle le levier de maintien 130 est propre à coopérer avec le dispositif de moussage de lait 28 pour le maintenir dans le logement de réception 26.

Lorsque le levier de maintien 130 est en position ouverte un utilisateur peut accéder au logement 26 et notamment au dispositif de moussage 28 pour le retirer du logement 26 et effectuer par exemple une opération de nettoyage du dispositif de moussage.

Lorsque le levier de maintien 130 est en position fermée et que le dispositif de moussage 28 est reçu dans le logement 26, le levier de maintien 130 est propre à coopérer avec le dispositif de moussage de lait 28 pour le maintenir dans le logement de réception 26.

Le levier de maintien 130 est monté pivotant par rapport au logement de réception selon l'axe longitudinal X.

Comme visible sur les figures, la position ouverte du levier de maintien 130 correspond à une position haute et la position fermée à une position basse.

Le levier de maintien 130 comprend notamment des saillies axiales 132, 134 propres à venir en appui contre le dispositif de moussage 28, lors du déplacement du levier de maintien 130 de la position ouverte à la position fermée alors que le dispositif de moussage 28 est positionné dans le logement de réception 26.

Les saillies axiales 132, 134 s'étendent depuis une face inférieure de la paroi supérieure 40.

Les saillies axiales 132, 134 s'étendent dans un plan sensiblement vertical.

Chaque saillie axiale 132, 134 est propre lorsque le dispositif de moussage 28 est mal positionné dans le logement de réception 26, à coopérer avec un ergot 62, 64 correspondant pour empêcher le déplacement du levier de maintien en position fermée. Les ergots 62, 64 forment des éléments de détrompage permettant de garantir un bon positionnement du dispositif de moussage 28 dans le logement de réception 26.

Avantageusement, chaque saillie axiale 132, 134, comprend un relief, par exemple en forme de crochet, propre à coopérer avec l'ergot 62, 64 correspondant.

En effet, dans le cas où le dispositif de moussage 28 est mal positionné et notamment pas complètement inséré dans le logement de réception 26 suivant la direction d'insertion, les ergots sont propres à coopérer avec les saillies axiales et avantageusement les reliefs, de sorte à empêcher un déplacement du levier de maintien 130 dans la position fermée. Ainsi, l'utilisateur réalise que le dispositif de moussage 28 n'est pas complètement inséré dans le logement de réception 26 et peut corriger son positionnement.

Avantageusement, chaque saillie axiale 132, 134 et avantageusement encore chaque relief est propre à coopérer avec l'ergot 62, 64 correspondant lorsque le dispositif de moussage 28 est correctement positionné dans le logement de réception 26 et que le levier de maintien 130 est déplacé dans la position fermée. Plus précisément, chaque relief est propre à appliquer un effort axial sur l'ergot 62, 64 correspondant lorsque le dispositif de moussage 28 est correctement positionné dans le logement de réception 26 et que le levier de maintien 130 est déplacé dans la position fermée.

L'effort axial est exercé selon la direction d'insertion du dispositif de moussage 28 dans le logement de réception 26 afin de garantir le bon positionnement du dispositif de moussage 28 dans la tête de distribution de boisson 18 et d'assurer la connexion de l'organe de connexion 50 à la sortie de distribution d'eau chaude/vapeur 20.

Les saillies axiales 132, 134 permettent de garantir via l'effort axial que l'organe de connexion 50 coopère avec la sortie de distribution d'eau chaude/vapeur 20 et que le conduit d'amenée de lait 90 est connecté à l'entrée d'alimentation 29 en lait de sorte que le bon fonctionnement du dispositif de moussage 28 est assuré.

Les saillies axiales 132, 134 sont agencées de part et d'autre d'un axe central de la tête de distribution de boisson 18. L'axe central est un axe vertical.

En variante le levier de maintien 130 comprend une seule saillie axiale.

Le levier de maintien 130 comprend également une face avant munie d'une zone de préhension 135 par l'utilisateur pour manipuler le levier de maintien 130 entre ses positions ouverte et fermée.

Avantageusement, la tête de distribution de boisson 18 comprend une façade supérieure munie d'un orifice de passage 136 de l'organe de réglage du débit d'air 102. Avantageusement l'orifice de passage 136 est formée au travers de la paroi supérieure 38 du corps principal 30.

Avantageusement, la tête de distribution de boisson 18 comprend une façade supérieure, telle que la paroi supérieure 40, munie d'une zone de visualisation 138 d'une partie de mélange 44 du dispositif de moussage 28. La zone de visualisation 138 est par exemple formée par un orifice ménagé au travers de la paroi supérieure 40 du corps de fermeture 34. En variante, la zone de visualisation 138 est une zone transparente ménagée dans la paroi supérieure 40.

La zone de visualisation 138 est agencée pour être en regard de la fenêtre de visualisation 97 lorsque le levier de maintien 130 et/ou le corps de fermeture 34 est en position fermée et que le dispositif de moussage 28 est reçu dans le logement 26. La zone de visualisation 138 permet de visualiser la chambre de de mélange 78 au travers de la fenêtre de visualisation 97. Ainsi, l'utilisateur est propre à observer la chambre de de mélange 78 et le lait moussé circulant au travers de la chambre de moussage. Cela permet à l'utilisateur de vérifier visuellement s'il est nécessaire de nettoyer le dispositif de moussage 28, ainsi que le bon fonctionnement du dispositif de moussage 28 en vérifiant le mouvement cyclonique du lait ainsi qu'avantageusement la texture du lait.

Le corps de fermeture 34 forme également un dispositif d'appui sur la partie de fermeture 96 du dispositif de moussage 28.

Le dispositif d'appui est propre lorsque le dispositif de moussage 28 est positionné dans le logement de réception 26, à exercer un effort d'appui sur la partie de fermeture 96 pour assurer une étanchéité entre l'élément de mélange 42 et la partie de fermeture 96.

Le dispositif d'appui permet également de maintenir une distance constante entre la partie de fermeture 96 et la paroi supérieure 54 lorsque la partie de fermeture 96 est en position de fermeture. Ainsi, le dimensionnel du conduit d'écoulement principal 48, de même que du canal d'admission d'air 92 lors de l'utilisation du dispositif de moussage 28 est maintenu dans le temps et les performances de moussage sont optimisées et garanties dans le temps. Le dispositif d'appui permet d'assurer un bon plaquage de la partie de fermeture 96 sur l'élément de mélange 42, pour assurer le dimensionnel du conduit 48 et du canal 92 et éviter une possible déformation de la partie de fermeture 96.

Le dispositif d'appui est formé par le levier de maintien 130 monté pivotant par rapport au logement de réception 26 et propre à être déplacé entre la position ouverte d'accès au logement de réception 26 et la position fermée dans laquelle le dispositif d'appui exerce l'effort d'appui sur la partie de fermeture 96 pour assurer un appui de la partie de fermeture 96 contre l'élément de mélange 42. Le levier de maintien 130 est notamment propre à appuyer la partie de fermeture 96 contre le joint d'étanchéité 110.

L'effort d'appui s'étend notamment selon une direction sensiblement verticale.

Le levier de maintien 130 comprend notamment une nervure supérieure 140, de préférence deux 140, 142, disposées sur la face inférieure de la paroi supérieure 40.

Les nervures 140, 142 s'étendent depuis une face inférieure de la paroi supérieure 40.

Les nervures 140, 142 sont propres à venir en appui contre le dispositif de moussage 28, lors du déplacement du levier de maintien 130 de la position ouverte à la position fermée alors que le dispositif de moussage 28 est positionné dans le logement de réception 26.

Les nervures 140, 142 sont propres à exercer l'effort d'appui sur la partie de fermeture 96 de sorte à garantir une bonne étanchéité entre l'élément de mélange 42 et la partie de fermeture 96.

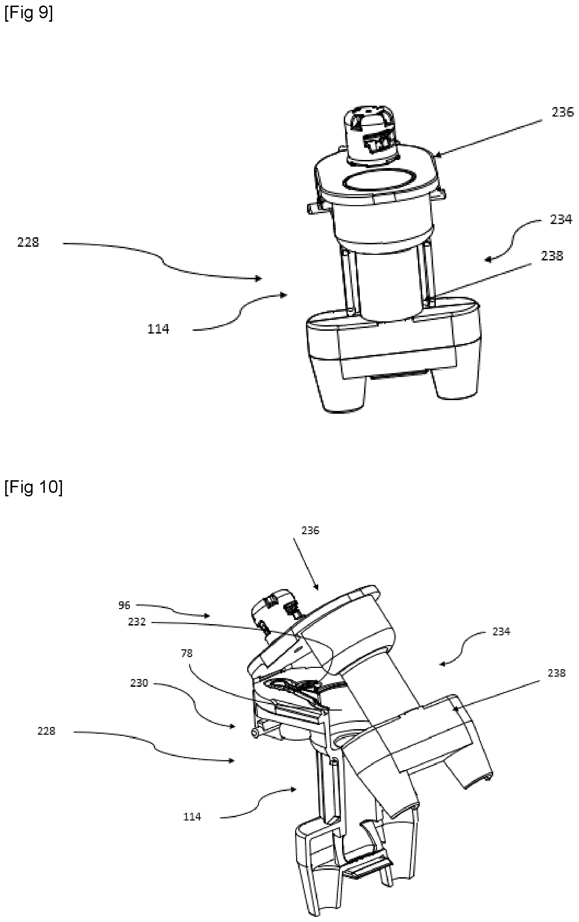

Avantageusement, le levier de maintien comprend également deux nervures additionnelles 144, 146, également appelées nervures avant, positionnées sur une paroi intérieure d'une façade avant du levier 130. Les nervures additionnelles 144, 146 s'étendent préférentiellement suivant l'axe longitudinal X. Les nervures additionnelles 144, 146 sont propres à venir en appui contre l'élément de distribution de lait moussé 114, lors du déplacement du levier de maintien 130 de la position ouverte à la position fermée alors que le dispositif de moussage 28 est positionné dans le logement de réception 26. Une telle configuration est particulièrement avantageuse dans le mode de réalisation des figures 9 et 10 comme cela sera expliqué par la suite.

En variante, le corps de fermeture est un capot avant d'habillage de la tête de distribution de boisson propre à venir fermer le logement de réception 26 notamment l'extrémité avant 32 du corps principal 30. Dans cette variante la tête de distribution de boisson 18 comprend un levier de maintien 130 articulé sur le corps principal 30 et distinct du corps de fermeture. Le levier de maintien 130 est mobile entre la position ouverte d'accès au logement de réception et la position fermée dans laquelle il vient fermer partiellement le logement de réception. Dans cette variante le levier de maintien est positionné entre le corps principal 30 et le corps de fermeture et a des caractéristiques globalement similaires au mode de réalisation représenté sur les figures mise à part qu'il n'a pas de rôle de capot d'habillage de la tête de distribution 18.

Dans la suite, le deuxième mode de réalisation de l'invention sera décrit à l'aide des figures 9 et 10. Seuls les éléments différents entre les premier et deuxième modes de réalisation seront décrits les éléments similaires n'étant pas décrits à nouveau et portant des références identiques au premier mode de réalisation.

Sur les figures 9 et 10 un dispositif de moussage 228 conforme au deuxième mode de réalisation de l'invention est représenté.

Le dispositif de moussage 228 comprend un premier corps 230 formant un élément de mélange 232 globalement similaire au premier mode de réalisation et comprenant l'orifice d'entrée d'eau chaude/vapeur 46, le conduit d'écoulement principal 48, le conduit d'amenée de lait 90 et le canal d'admission d'air 92.

L'élément de mélange 232 diffère de l'élément de mélange 42 en ce qu'il forme un contour partiel de la chambre de mélange 78 et pas la totalité de la chambre de mélange 78.

Le dispositif de moussage 228 comprend également un deuxième corps 234 mobile par rapport au premier corps 230. Le deuxième corps 234 est articulé par rapport au premier corps 230 via une charnière définissant un axe transversal de rotation sensiblement horizontal. L'axe de rotation est avantageusement perpendiculaire à l'axe longitudinal X lorsque le dispositif de moussage 228 est positionné dans le logement de réception 26. L'articulation est positionnée le long d'un bord arrière d'une face supérieure du premier corps 230.

Le deuxième corps 234 forme la partie de fermeture et est mobile entre la position d'ouverture et la position de fermeture.

Le deuxième corps 234 comprend une première portion 236, sensiblement horizontale en situation d'usage du dispositif de moussage 228, formant un couvercle propre à fermer l'ouverture d'accès 80 de la chambre de mélange 78 et le conduit d'écoulement principal 48 lorsque le deuxième corps 234 est en position de fermeture, et une portion 238, sensiblement verticale en situation d'usage du dispositif de moussage 228, formant avec le premier corps 230, lorsque le deuxième corps 234 est en position de fermeture, la chambre de mélange 78 et avantageusement l'élément de distribution de lait moussé 114.

Dans ce deuxième mode de réalisation, la chambre de mélange 78 et l'élément de distribution de lait moussé 114 sont formés par l'assemblage du premier corps 230 et du deuxième corps 234 lorsque le deuxième corps 234 est en position de fermeture.

Ainsi, lors du déplacement du deuxième corps en position d'ouverture la chambre de mélange 78 et l'élément de distribution de lait moussé 114 sont ouverts de sorte que leur nettoyage est facilité.

Les nervures additionnelles 144, 146 sont propres à exercer un effort d'appui respectivement contre la chambre de mélange 78 et l'élément de distribution de lait moussé 114. L'effort d'appui s'exerce sur le deuxième corps 234 suivant une direction sensiblement horizontale. Les nervures additionnelles 144, 146 sont particulièrement utiles avec le dispositif de moussage 228 conforme au deuxième mode de réalisation pour garantir l'étanchéité de la chambre de mélange 78 et de l'élément de distribution de lait moussé 114.

Dans ce deuxième mode de réalisation, les zones de préhension du dispositif de moussage 228 sont formées sur des parois latérales de l'élément de distribution de lait moussé 114.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Tête de distribution de boisson (18) comprenant une sortie de distribution d'eau chaude/vapeur (20) et un logement de réception (26) d'un dispositif de moussage de lait (28, 228) muni d'un orifice d'entrée d'eau chaude/vapeur (46) propre à être relié fluidiquement à la sortie de distribution d'eau chaude/vapeur (20), le dispositif de moussage de lait (28, 228) comprenant un élément de mélange (42, 232), **caractérisée en ce que** le dispositif de moussage de lait (28, 228) comprend une partie de fermeture (96, 234) mobile par rapport à l'élément de mélange (42, 232) et **en ce que** la tête de distribution (18) comprend un dispositif d'appui (130) sur la partie de fermeture (96, 234) propre, lorsque le dispositif de moussage de lait (28, 228) est positionné dans le logement de réception (26), à exercer un effort d'appui sur la partie de fermeture (96, 234) pour assurer un appui de la partie de fermeture contre l'élément de mélange (42, 232).

2. Tête de distribution de boisson (18) selon la revendication 1, **caractérisée en ce que** le dispositif d'appui (130) comprend un levier de maintien (130) monté pivotant par rapport au logement de réception (26) et propre à être déplacé entre une position ouverte d'accès au logement de réception (26) et une position fermée dans laquelle le dispositif d'appui (130) exerce l'effort d'appui sur la partie de fermeture (96, 234).

3. Tête de distribution de boisson (18) selon la revendication précédente, **caractérisée en ce que** le dispositif d'appui (130) comprend au moins une nervure supérieure (140, 142) disposée sur une paroi supérieure (40) du levier de maintien (130) et propre à venir en appui contre la partie de fermeture (96, 234) lorsque le levier de maintien (130) est en position fermée.

4. Tête de distribution de boisson selon la revendication 2 ou 3, **caractérisée en ce que** le dispositif d'appui (130) comprend au moins une nervure avant (144, 146) disposée sur une façade avant du levier de maintien (130) et propre à venir en appui contre la partie de fermeture (96, 234) lorsque le levier de maintien (130) est en position fermée.

5. Tête de distribution de boisson (18) selon l'une quelconque des revendications 2 à 4, **caractérisée en ce que** le levier de maintien (130) est monté pivotant selon un axe longitudinal (X) de la tête de distribution de boisson (18), la position ouverte correspondant à une position haute et la position fermée à une position basse.

6. Tête de distribution de boisson (18) selon l'une quelconque des revendications 2 à 5, **caractérisée en ce que** le levier de maintien (130) comprend une face avant munie d'une zone de préhension (135) par l'utilisateur pour manipuler le levier de maintien (130) entre ses positions ouverte et fermée.

7. Tête de distribution de boisson (18) selon l'une quelconque des revendications précédentes, **caractérisée en ce que** le logement de réception (26) comprend au moins un élément de guidage (70, 72) du dispositif de moussage de lait (28, 228) propre à coopérer avec un élément de guidage (66, 68) correspondant situé sur le dispositif de moussage de lait (28, 228).

8. Tête de distribution de boisson (18) selon la revendication précédente, **caractérisée en ce que** chaque élément de guidage (70, 72) du logement de réception est propre à maintenir une partie de fermeture (96, 234) du dispositif de moussage en contact avec un élément de mélange (42, 232) du dispositif de moussage de lait lorsque le dispositif de moussage de lait (28, 228) est inséré dans le logement de réception (26).

9. Tête de distribution de boisson (18) selon l'une quelconque des revendications précédentes, **caractérisée en ce que** la tête de distribution (18) comprend une paroi supérieure munie d'un orifice de passage (136) d'un organe de réglage du débit d'air (102) dans le dispositif de moussage de lait (28, 228).

10. Tête de distribution de boisson (18) selon l'une quelconque des revendications précédentes, **caractérisée en ce que** la tête de distribution (18) comprend une paroi supérieure munie d'une zone de visualisation (138) d'une partie de mélange (44) du dispositif de moussage de lait (28, 228).

11. Tête de distribution de boisson (18) selon l'une quelconque des revendications précédentes, **caractérisée en ce que** la tête de distribution (18) comprend une zone arrière (24) recevant un organe de distribution de boisson (22) et une zone avant définissant le logement de réception (26) du dispositif de moussage de lait (28, 228).

12. Machine de distribution de boisson (10) comprenant une tête de distribution de boisson (18), **caractérisée en ce que** la tête de distribution de boisson (18) est selon l'une quelconque des revendications précédentes.
